# EUROPEAN PATENT APPLICATION

(11) **EP 4 656 962 A1**
(43) Date of publication of application: **03.12.2025**
(21) Application number: 24813685.5
(22) Date of filing: 10.01.2024
(51) Int. Cl.: F24F 11/36, F24F 11/64, F24F 11/86, F24F 11/49

(54) **LEAKAGE CONTROL METHOD AND CONTROL APPARATUS FOR COMBUSTIBLE REFRIGERANT, AND AIR CONDITIONER**

(30) Priority: 31.05.2023 CN 202310639234
(71) Applicant: Qingdao Haier Air-Conditioning Electronic Co., Ltd, Qingdao, Shandong 266500 (CN); Qingdao Haier Air Conditioner General Corp., Ltd., Qingdao, Shandong 266101 (CN); Qingdao Haier Smart Technology R&D Co., Ltd., Qingdao, Shandong 266101 (CN); HAIER SMART HOME CO., LTD., Qingdao, Shandong 266101 (CN)
(72) Inventor: SONG, Deyue, Qingdao, Shandong 266101 (CN); MAO, Shoubo, Qingdao, Shandong 266101 (CN); LUO, Jianwen, Qingdao, Shandong 266101 (CN)
(74) Representative: Raffay & Fleck
(86) International application number: PCT/CN2024/071551
(87) International publication number: WO 2024/244479

(57) **Abstract**

A leakage control method and control apparatus for a combustible refrigerant, and an air conditioner. The leakage control method for a combustible refrigerant comprises: receiving a startup instruction for controlling an air conditioner to start up, and acquiring an indoor ambient temperature and an outdoor ambient temperature, and an actual saturation temperature corresponding to at least one of a low pressure and a high pressure of a compressor (1); determining a standard saturation temperature according to the indoor ambient temperature and the outdoor ambient temperature; and generating execution logic according to the actual saturation temperature and the standard saturation temperature, and controlling the operation of the compressor (1) according to the execution logic.

## Description

### CROSS-REFERENCES TO RELATED APPLICATIONS

The present application claims priority to Chinese Patent Application No. 202310639234X, filed on May 31, 2023, entitled "Leakage Control Method and Control Apparatus for Combustible Refrigerant, and Air Conditioner", which is hereby incorporated by reference in its entirety.

### FIELD

The present application relates to the field of electric appliance, and in particular to a control method and a control device for leakage of a flammable refrigerant and an air conditioner.

### BACKGROUND

In the related art, with the advancement of the current European carbon emission policy, flammable or low-flammable refrigerants have gradually entered people's view and entered thousands of households. However, flammable refrigerants such as R32/R290 will have a certain risk of leakage during operation. If concentrations of the flammable refrigerants reach a certain range and an ignition source is present, it is easy to cause fire or explosion, which further causes hidden dangers to personal safety.

At present, in a traditional air conditioner, a concentration of a leaked refrigerant may be identified through a concentration detector, which has problems of high cost and malfunction of sensors. In a situation that current refrigerant leakage is not serious, it will cause a waste of resources.

### BRIEF SUMMARY

The present application provides a control method and a control device for leakage of a flammable refrigerant and an air conditioner, which solve defects in the related art and achieve the following effects that safety risks such as fire or explosion due to leakage of flammable refrigerants in the air conditioner are avoided, an application safety coefficient of the air conditioner is improved, safety hazards due to the leakage of flammable refrigerant are reduced or even avoided, and the personal safety of a user is ensured.

A control method for leakage of a flammable refrigerant according to an embodiment of the present application includes:
receiving a turn-on instruction for controlling an air conditioner to be turned on, obtaining an indoor ambient temperature, an outdoor ambient temperature, and an actual saturation temperature corresponding to at least one of a low pressure or a high pressure of a compressor;
determining a standard saturation temperature based on the indoor ambient temperature and the outdoor ambient temperature; and
generating execution logic based on the actual saturation temperature and the standard saturation temperature, and controlling operation of the compressor based on the execution logic.

According to an embodiment of the present application, generating the execution logic based on the actual saturation temperature and the standard saturation temperature, and controlling the operation of the compressor based on the execution logic includes:
controlling the compressor to be started in case that a difference between the actual saturation temperature and the standard saturation temperature does not exceed a given alarm threshold; or
controlling the air conditioner to perform a leakage protection operation in case that a difference between the actual saturation temperature and the standard saturation temperature exceeds a given alarm threshold, and controlling the compressor to be turned on after the leakage protection operation is completed.

According to an embodiment of the present application, the leakage protection operation includes:
controlling a fresh air system linked to the air conditioner to be started.

According to an embodiment of the present application, the leakage protection operation includes:
controlling an indoor fan and/or an outdoor fan of the air conditioner to be started and operate for a given duration.

According to an embodiment of the present application, in controlling the indoor fan and/or the outdoor fan of the air conditioner to be started and operate for the given duration,
the indoor fan and/or outdoor fan are determined to be started, and a rotation speed of the indoor fan and/or outdoor fan is adjusted based on the difference between the actual saturation temperature and the standard saturation temperature,
where the difference between the actual saturation temperature and the standard saturation temperature is positively correlated with the rotation speed of the indoor fan and/or outdoor fan.

According to an embodiment of the present application, in controlling the indoor fan and/or the outdoor fan of the air conditioner to be started and operate for the given duration,
the indoor fan and/or outdoor fan is controlled to be started at a lowest rotation speed, and the given duration is determined based on the difference between the actual saturation temperature and the standard saturation temperature,
where the difference between the actual saturation temperature and the standard saturation temperature is positively correlated with the given duration.

According to an embodiment of the present application, determining the standard saturation temperature based on the indoor ambient temperature and the outdoor ambient temperature includes:
in case that an absolute value of the difference between the indoor ambient temperature and the outdoor ambient temperature does not exceed a given difference, determining the standard saturation temperature to be a first given temperature, where the first given temperature is equal to the outdoor ambient temperature; or
in case that an absolute value of the difference between the indoor ambient temperature Tai and the outdoor ambient temperature Tao exceeds a given difference, determining the standard saturation temperature to be a second given temperature, where the second given temperature is α×Tao+β×Tai, and α and β are constants.

According to an embodiment of the present application, controlling the air conditioner to perform the leakage protection operation in case that the difference between the actual saturation temperature and the standard saturation temperature exceeds the given alarm threshold, and controlling the compressor to be turned on after the leakage protection operation is completed include:
in case that the difference between the actual saturation temperature and the standard saturation temperature exceeds the given alarm threshold, controlling the air conditioner to send alarm information to a user and obtain a control instruction issued by the user;
in case that the control instruction is determined to be shut down, controlling the air conditioner to be shut down; or
in case that the control instruction is determined to continue to start, controlling the air conditioner to perform the leakage protection operation until the difference between the actual saturation temperature and the standard saturation temperature is less than or equal to the given alarm threshold, and controlling the compressor to be turned on.

According to an embodiment of the present application, controlling the air conditioner to perform the leakage protection operation in case that the difference between the actual saturation temperature and the standard saturation temperature exceeds the given alarm threshold, and controlling the compressor to be turned on after the leakage protection operation is completed include:
obtaining a detection concentration of a leaked refrigerant in case that a difference between the actual saturation temperature and the standard saturation temperature exceeds the given alarm threshold;
controlling the air conditioner to be shut down in case that the detection concentration of the leaked refrigerant is greater than a given concentration; or
controlling the air conditioner to perform the leakage protection operation in case that the detection concentration of the leaked refrigerant is less than or equal to a given concentration, and controlling the compressor to be turned on after the leakage protection operation is completed.

A control device for leakage of a flammable refrigerant according to an embodiment of the present application includes:
an obtaining module, used for receiving a turn-on instruction for controlling an air conditioner to be turned on, obtaining an indoor ambient temperature, an outdoor ambient temperature, and an actual saturation temperature corresponding to at least one of a low pressure or a high pressure of a compressor;
a first controlling module, used for determining a standard saturation temperature based on the indoor ambient temperature and the outdoor ambient temperature; and
a second controlling module, used for generating execution logic based on the actual saturation temperature and the standard saturation temperature, and controlling operation of the compressor based on the execution logic.

An air conditioner according to the present application includes a memory, a processor, and a computer program stored in the memory and executable on the processor. When executing the computer program, the processor performs the control method for leakage of the flammable refrigerant described in the present application.

The present application provides the control method for leakage of the flammable refrigerant. Before the air conditioner is turned on, and the indoor ambient temperature, the outdoor ambient temperature, the actual saturation temperature corresponding to high pressure and/or low pressure and other parameters are obtained. By analyzing and determining the relationship between the above parameters, whether a problem of leakage of the flammable refrigerant occurs inside the air conditioner is determined. In case that a problem of leakage of the flammable refrigerant occurs inside the air conditioner, by controlling the compressor to continue to be shut down and controlling the indoor and outdoor fans to start to reduce the concentration of the leaked refrigerant, the air conditioner is prevented from fire or explosion due to the leakage of flammable refrigerant, which improves an application safety coefficient of the air conditioner, reduces or even avoids safety hazards due to the leakage of flammable refrigerant, and ensures the personal safety of a user.

In addition, in the control method of the present application, whether a problem of leakage of the refrigerant inside the air conditioner may be determined by obtaining and analyzing the above parameters. Compared with the solutions in the related art, installation of a concentration detector is omitted, the cost is reduced, the structure is simplified, and there is no need to worry about the malfunction of the concentration detector, and the control is more stable.

### BRIEF DESCRIPTION OF THE DRAWINGS

To more clearly illustrate solutions in the present application or the prior art, the drawings needed to be used in the descriptions of the embodiments or the prior art will be briefly introduced below. The drawings in the following description are some embodiments of the present application, and other drawings can be obtained based on o the drawings for those skilled in the art without any creative work.
FIG. 1 is a schematic flowchart of a control method for leakage of a flammable refrigerant according to the present application;
FIG. 2 is a schematic structural diagram of a control device for leakage of a flammable refrigerant according to the present application;
FIG. 3 is a schematic structural diagram of an air conditioner according to the present application; and
FIG. 4 is a schematic structural diagram of an electronic device according to the present application.

### Reference numerals:

1: compressor; 2: four-way valve; 3: condenser; 4: electronic expansion valve; 5: evaporator; 6: outdoor fan; 7: indoor fan; 8: outdoor temperature sensor; 9: indoor temperature sensor; 10: high pressure sensor; 11: low pressure sensor; 110: obtaining module; 120: first controlling module; 130: second controlling module.

### DETAILED DESCRIPTION

To illustrate objectives, solutions and advantages of the present application, the solutions of the present application are described clearly and completely below in combination with the drawings in the application. The described embodiments are part of the embodiments of the application, not all of them. All other embodiments obtained by those skilled in the art based on the embodiments of the present application without any creative work fall within the protection scope of the present application.

A control method and a control device for leakage of a flammable refrigerant and an air conditioner according to the present application are described below in conjunction with the drawings. Before the embodiments of the present application are described in detail, the entire application scenario is described first. The control method and the control device for leakage of the flammable refrigerant, an electronic device and a computer-readable storage medium according to the embodiments of the present application may be applied to the air conditioner locally, a cloud platform in the Internet field, or other types of cloud platforms in the Internet field, or may also be applied to third-party devices. The third-party devices may include a mobile phone, a tablet computer, a notebook, a vehicle-mounted computer and other smart terminals.

The description is made below by taking a control method for leakage of a flammable refrigerant applicable to the air conditioner as an example. It should be understood that the control method of the embodiment of the present application may also be applied to the cloud platform and third-party devices.

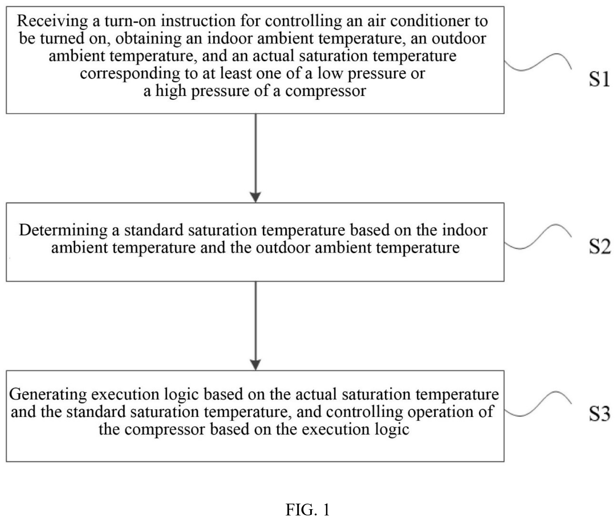

As shown in FIG. 1, a control method for leakage of a flammable refrigerant according to an embodiment of the present application includes the following steps.

Step S1: receiving a turn-on instruction for controlling an air conditioner to be turned on, obtaining an indoor ambient temperature, an outdoor ambient temperature, and an actual saturation temperature corresponding to at least one of a low pressure or a high pressure of a compressor.

Step S2: determining a standard saturation temperature based on the indoor ambient temperature and the outdoor ambient temperature.

Step S3: generating execution logic based on the actual saturation temperature and the standard saturation temperature, and controlling operation of the compressor 1 based on the execution logic.

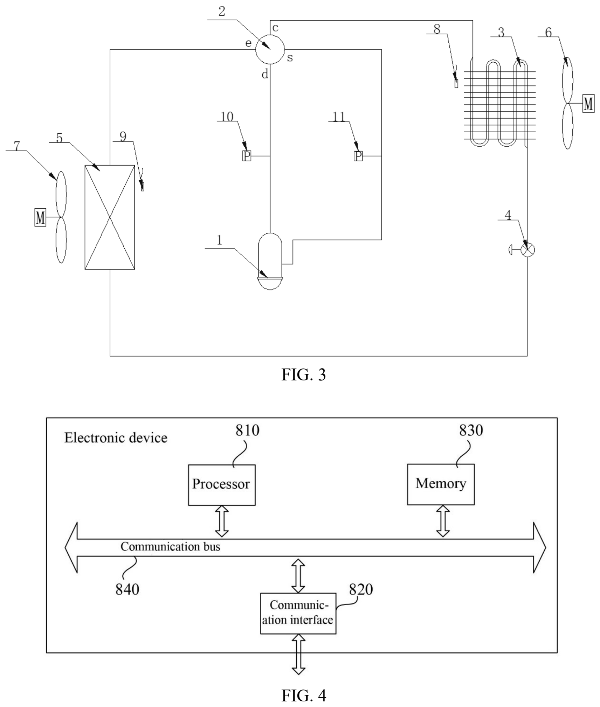

The control method for leakage of the flammable refrigerant according to an embodiment of the present application is applicable to electrical appliances such as an air conditioning system or a heat pump water heater system that use flammable refrigerants for refrigeration cycles and heating cycles. The control method for leakage of the flammable refrigerant of the present application applied to the air conditioning system is taken as an example. As shown in FIG. 3, after the air conditioner receives a refrigeration instruction, an air conditioning compressor 1 starts, and the refrigerant flows through a four-way valve 2 to a condenser 3 of an outdoor unit, and enters an evaporator 5 of an indoor unit through the throttling of an electronic expansion valve 4, and then enters the compressor 1 through the four-way valve 2, thereby completing a complete refrigeration cycle.

Based on the above air conditioning structure, the specific working principle of the control method for leakage of the flammable refrigerant provided in the present application is as follows. Since the system pressure (i.e., high pressure and low pressure) will be in a stable state before a unit is started, it is possible to determine whether a fault of leakage of a refrigerant in the air conditioner by detecting whether this stable state is normal.

Specifically, before the unit is operating, by detecting the indoor ambient temperature and the outdoor ambient temperature, and collecting the high pressure and low pressure at both ends of the compressor 1, a high-pressure saturation temperature corresponding to the high pressure is equal to a low-pressure saturation temperature corresponding to the low pressure in a normal shutdown state, and the high-pressure saturation temperature and the low-pressure saturation temperature respectively have a certain relationship with the indoor ambient temperature and the outdoor ambient temperature in the normal shutdown state. In the control method of the present application, it is determined that whether a refrigerant leaks through the relationship between the above parameters, and then controls the start or continued shutdown of the compressor 1.

Based on the above working principle, the specific working procedure of the control method for leakage of the present application is as follows. After a user issues a control instruction to turn on the air conditioner, the controller receives the turn-on instruction to control the air conditioner to turn on. After receiving the above turn-on instruction, the controller obtains an indoor ambient temperature based on a detection result of an indoor temperature sensor 9, and obtains an outdoor ambient temperature based on a detection result of an outdoor temperature sensor 8. Furthermore, the controller will further obtain at least one of the low pressure or high pressure of the compressor 1, and determine a low-pressure saturation temperature corresponding to the low pressure and/or a high-pressure saturation temperature corresponding to the high pressure based on the low pressure and/or the high pressure.

Subsequently, the controller will analyze and determine the indoor ambient temperature and the outdoor ambient temperature to obtain the standard saturation temperature corresponding to different situations and scenarios. It may be understood that in the normal shutdown state of the air conditioner (that is, the state where no refrigerant leakage occurs inside the air conditioner), the low-pressure saturation temperature and the high-pressure saturation temperature (collectively referred to as the actual saturation temperature) are usually equal, and the actual saturation temperature satisfies a certain relationship with the indoor ambient temperature and the outdoor ambient temperature, that is, the actual saturation temperature satisfies a certain relationship with the standard saturation temperature obtained in step S2. Therefore, in step S3, the controller will analyze and compare the actual saturation temperature with the standard saturation temperature to determine whether actual saturation temperature and the standard saturation temperature satisfy the standard relationship in the normal shutdown state. If not, it proves that a problem of leakage of the flammable refrigerant occurs inside the air conditioner. At this time, by controlling the compressor 1 to continue to be shut down, and controlling the indoor and outdoor fans to start to reduce the concentration of the leaked refrigerant, safety risks such as fire or explosion due to the leakage of flammable refrigerant may be avoided, an application safety coefficient of the air conditioner is improved, safety hazards due to the leakage of flammable refrigerant are reduced or even avoided, and the personal safety of a user is ensured.

A low-pressure pressure sensor 11 and a high-pressure pressure sensor 10 are respectively provided at an air intake port and an exhaust port of the compressor 1, the low-pressure pressure sensor 11 is configured to detect the low-pressure pressure, and the high-pressure pressure sensor 10 is configured to detect the high-pressure pressure. The controller may obtain the low-pressure saturation temperature corresponding to the low pressure and/or the high-pressure saturation temperature corresponding to the high pressure (collectively referred to as the actual saturation temperature) based on a pressure-saturation temperature comparison table.

In the related art, with the advancement of the current European carbon emission policy, flammable or low-flammable refrigerants have gradually entered people's view and entered thousands of households. However, flammable refrigerants such as R32/R290 will have a certain risk of leakage during operation. If concentrations of the flammable refrigerants reach a certain range and an ignition source is present, it is easy to cause fire or explosion, which further causes hidden dangers to personal safety.

At present, in a traditional air conditioner, a concentration of a leaked refrigerant may be identified through a concentration detector, which has problems of high cost and failure of sensors. In the current situation that refrigerant leakage is not much, it will cause a waste of resources.

In order to solve the defects in the above-mentioned related art, the present application provides the control method for leakage of the flammable refrigerant. Before the air conditioner is turned on, and the indoor ambient temperature, the outdoor ambient temperature, the actual saturation temperature corresponding to high pressure and/or low pressure and other parameters are obtained. By analyzing and determining the relationship between the above parameters, whether a problem of leakage of the flammable refrigerant occurs inside the air conditioner is determined. In case that a problem of leakage of the flammable refrigerant occurs inside the air conditioner, by controlling the compressor to continue to be shut down and controlling the indoor and outdoor fans to start to reduce the concentration of the leaked refrigerant, the air conditioner is prevented from fire or explosion due to the leakage of flammable refrigerant, which improves an application safety coefficient of the air conditioner, reduces or even avoids safety hazards due to the leakage of flammable refrigerant, and ensures the personal safety of a user.

In addition, in the control method of the present application, whether a problem of leakage of the refrigerant inside the air conditioner may be determined by obtaining and analyzing the above parameters. Compared with the solutions in the related art, installation of a concentration detector is omitted, the cost is reduced, the structure is simplified, and there is no need to worry about the malfunction of the concentration detector, and the control is more stable.

According to some embodiments of the present application, determining the standard saturation temperature based on the indoor ambient temperature and the outdoor ambient temperature includes:
in case that an absolute value of the difference between the indoor ambient temperature and the outdoor ambient temperature does not exceed a given difference, determining the standard saturation temperature to be a first given temperature, where the first given temperature is equal to the outdoor ambient temperature; or
in case that an absolute value of the difference between the indoor ambient temperature and the outdoor ambient temperature exceeds a given difference, determining the standard saturation temperature to be a second given temperature, where the second given temperature is equal to α×outdoor ambient temperature+β×indoor ambient temperature, and α and β are constants.

It may be understood that in the normal shutdown state, that is, the state where no refrigerant leakage occurs inside the air conditioner, the high-pressure saturation temperature Pd_t corresponding to the high pressure Pd, the low-pressure saturation temperature Ps_t corresponding to the low pressure Ps, the indoor ambient temperature Tai and the outdoor ambient temperature Tao satisfy the following relationship:
under normal circumstances, in case that the difference between Tao and Tai is not large, that is, |Tao-Tai|≤5°C, Pd_t=Ps_t=Tao.

In case that difference between Tao and Tai is larger, that is, |Tao-Tai|>5°C, Pd_t=Ps_t =α×Tao+β×Tai, where α and β are constants and are generally set to 1.

In the present embodiment, in case that the absolute value of the difference between the indoor ambient temperature and the outdoor ambient temperature exceeds the given difference (for example, 5°C), the standard saturation temperature is α×Tao+β×Tai. In case that the absolute value of the difference between the indoor ambient temperature and the outdoor ambient temperature does not exceed the given difference (for example, 5°C), the standard saturation temperature is Tao.

It should be noted that the above-mentioned given difference may be set according to actual needs, and the present application does not specifically limit the specific size of the given difference.

According to some embodiments of the present application, generating the execution logic based on the actual saturation temperature and the standard saturation temperature, and controlling the operation of the compressor based on the execution logic includes:
controlling the compressor 1 to be started in case that a difference between the actual saturation temperature and the standard saturation temperature does not exceed a given alarm threshold; or
controlling the air conditioner to perform a leakage protection operation in case that a difference between the actual saturation temperature and the standard saturation temperature exceeds a given alarm threshold, and controlling the compressor 1 to be turned on after the leakage protection operation is completed.

It may be understood that in case that the difference between the actual saturation temperature and the standard saturation temperature is small, that is, the difference does not exceed the given alarm threshold, it proves that no leakage of flammable refrigerant occurs inside the air conditioner, or the amount of flammable refrigerant leaked in the air conditioner is very small, which does not affect the normal usage of the air conditioner. At this time, the controller may directly control the compressor 1 to start, without worrying about the various safety risks due to the refrigerant leakage.

In case that the difference between the actual saturation temperature and the standard saturation temperature is large, that is, the difference exceeds the given alarm threshold, it proves that a leakage event of a flammable refrigerant occurs inside the air conditioner, and the amount of flammable refrigerant leakage is also large. At this time, the compressor 1 is not turned on first, and the air conditioner performs a leakage protection operation to process the flammable refrigerant leaked in the air conditioner, and the compressor 1 is turned on to operate normally only after the processing is completed. As such, the leaked flammable refrigerant is processed through the leakage protection operation, avoiding safety accidents due to excessive leakage of flammable refrigerant inside the air conditioner, and ensuring the safety of the user.

In an embodiment of the present application, the leakage protection operation includes: controlling a fresh air system linked to the air conditioner to be started.

As such, by introducing fresh air through the fresh air system to dilute the concentration of the leaked flammable refrigerant inside the air conditioner, the leaked refrigerant may be processed, to avoid safety accidents due to excessive concentration of the leaked refrigerant. It may be understood that in case that the concentration of the leaked flammable refrigerant is diluted to a certain extent, that is, in case that the fresh air system is started for a certain duration, the compressor 1 may be directly started to operate normally. At this time, the concentration of the leaked refrigerant is very low, and there is no need to worry about the occurrence of safety hazards such as fire and explosion.

According to another embodiment of the present application, the leakage protection operation includes: controlling an indoor fan 7 and/or an outdoor fan 6 of the air conditioner to be started and operate for a given duration.

As such, an air flow of the indoor fan 7 and/or the outdoor fan 6 is used to accelerate the diffusion of the leaked refrigerant, thereby processing the leaked refrigerant and quickly reducing the concentration of the leaked flammable refrigerant. It may be understood that when the indoor fan 7 and/or the outdoor fan 6 are started and operates for a given duration, the compressor 1 may be directly started to operate normally. At this time, the concentration of the leaked refrigerant is very low, and there is no need to worry about the occurrence of safety hazards such as fire and explosion.

For example, after receiving the turn-on instruction, the indoor and outdoor units communicate and obtain Pd_t and Ps_t. In case that Pd_t and Ps_t do not exceed the alarm threshold, the indoor and outdoor unit fans operate for 45 seconds, and then normally perform unit startup and operation procedures until the end.

According to some embodiments of the present application, in controlling the indoor fan 7 and/or the outdoor fan 6 of the air conditioner to be started and operate for the given duration,
the indoor fan 7 and/or outdoor fan 6 are determined to be started, and a rotation speed of the indoor fan 7 and/or outdoor fan 6 is adjusted based on the difference between the actual saturation temperature and the standard saturation temperature,
where the difference between the actual saturation temperature and the standard saturation temperature is positively correlated with the rotation speed of the indoor fan 7 and/or outdoor fan 6.

It may be understood that the difference between the actual saturation temperature and the standard saturation temperature may indirectly characterize a leakage amount of the flammable refrigerant in the air conditioner. That is, in case that the above difference is larger, the leakage amount of the flammable refrigerant in the air conditioner is also larger. At this time, in order to accelerate the diffusion of the flammable refrigerant, the controller will correspondingly adjust the rotation speed of the indoor fan 7 and/or the outdoor fan 6 to increase, the current rotation speed may match the current leakage amount of the refrigerant, and then the given duration of the indoor fan 7 and/or the outdoor fan 6 may be stabilized at a certain standard value, and the control is more stable and accurate.

According to another embodiment of the present application, in controlling the indoor fan 7 and/or the outdoor fan 6 of the air conditioner to be started and operate for the given duration,
the indoor fan 7 and/or outdoor fan 6 is controlled to be started at a lowest rotation speed, and the given duration is determined based on the difference between the actual saturation temperature and the standard saturation temperature,
where the difference between the actual saturation temperature and the standard saturation temperature is positively correlated with the given duration.

It may be understood that the difference between the actual saturation temperature and the standard saturation temperature may indirectly characterize a leakage amount of the flammable refrigerant in the air conditioner. That is, in case that the above difference is larger, the leakage amount of the flammable refrigerant in the air conditioner is also larger. Therefore, in order to completely diffuse the leaked flammable refrigerant, in case that the rotation speed of the indoor fan 7 and/or the outdoor fan 6 is constant, the greater the leakage amount of flammable refrigerant, the longer the given duration of the fan operation is to ensure the complete diffusion of the leaked refrigerant and avoid safety hazards such as fire and explosion due to insufficient diffusion of the refrigerant.

According to some embodiments of the present application, controlling the air conditioner to perform the leakage protection operation in case that the difference between the actual saturation temperature and the standard saturation temperature exceeds the given alarm threshold, and controlling the compressor to be turned on after the leakage protection operation is completed include:
in case that the difference between the actual saturation temperature and the standard saturation temperature exceeds the given alarm threshold, controlling the air conditioner to send alarm information to a user and obtain a control instruction issued by the user;
in case that the control instruction is determined to be shut down, controlling the air conditioner to be shut down; or
in case that the control instruction is determined to continue to start, controlling the air conditioner to perform the leakage protection operation until the difference between the actual saturation temperature and the standard saturation temperature is less than or equal to the given alarm threshold, and controlling the compressor 1 to be turned on.

In the present embodiment, in case that the difference between the actual saturation temperature and the standard saturation temperature exceeds the given alarm threshold, in order to prevent a false alarm caused by environmental reasons, the alarm information is further sent to the user to make a decision whether to shut down. In case that the user issues a shutdown instruction, the air conditioner is directly shut down. In case that the user requires continuing to start, the indoor and outdoor fans are forced to start for 90 s. At this time, the unit does not start, and the system pressure will further change after the fan is forced to start, and then detection of the system pressure will continue. In case that the start-up condition is satisfied, the unit is turned on.

According to another embodiment of the present application, controlling the air conditioner to perform the leakage protection operation in case that the difference between the actual saturation temperature and the standard saturation temperature exceeds the given alarm threshold, and controlling the compressor to be turned on after the leakage protection operation is completed include:
obtaining a detection concentration of a leaked refrigerant in case that a difference between the actual saturation temperature and the standard saturation temperature exceeds the given alarm threshold;
controlling the air conditioner to be shut down in case that the detection concentration of the leaked refrigerant is greater than a given concentration; or
controlling the air conditioner to perform the leakage protection operation in case that the detection concentration of the leaked refrigerant is less than or equal to a given concentration, and controlling the compressor to be turned on after the leakage protection operation is completed.

In the present embodiment, in case that the difference between the actual saturation temperature and the standard saturation temperature exceeds the given alarm threshold, in order to prevent the false alarm caused by environmental reasons, a detection concentration of the leaked refrigerant will be further obtained. In case that the detection concentration of the leaked refrigerant is greater than the given concentration, the air conditioner will be directly shut down. In case that the detection concentration of the leaked refrigerant is less than or equal to the given concentration, the indoor and outdoor fans are forced to start for 90 s, and the unit will not start at this time. The system pressure will further change after the fan is forced to start, and then the detection of the system pressure will continue. In case that the start-up condition is satisfied, the unit is turned on.

A control device for leakage of a flammable refrigerant according to the present application is described below. The control device for leakage of the flammable refrigerant described below and the control method for leakage of the flammable refrigerant described above may be referenced with each other.

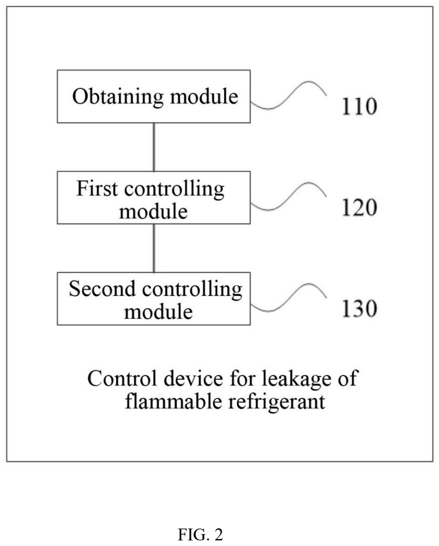

As shown in FIG. 2, a control device for leakage of a flammable refrigerant according to an embodiment of the present application includes:
an obtaining module 110, used for receiving a turn-on instruction for controlling an air conditioner to be turned on, obtaining an indoor ambient temperature, an outdoor ambient temperature, and an actual saturation temperature corresponding to at least one of a low pressure or a high pressure of a compressor 1;
a first controlling module 120, used for determining a standard saturation temperature based on the indoor ambient temperature and the outdoor ambient temperature; and
a second controlling module 130, used for generating execution logic based on the actual saturation temperature and the standard saturation temperature, and controlling operation of the compressor 1 based on the execution logic.

An air conditioner according to the present application includes an indoor unit, an outdoor unit, and the control device for leakage of the flammable refrigerant as described in the present application.

As shown in FIG. 3, according to some embodiments of the present application, the air conditioner includes a condenser 3, a four-way valve 2, a compressor 1, an evaporator 5 and an electronic expansion valve 4 connected by refrigerant pipelines.

A low-pressure pressure sensor 11 is provided at an air intake port of the compressor 1, a high-pressure pressure sensor 10 is provided at an air exhaust port of the compressor 1, an outdoor temperature sensor 8 is provided inside the outdoor unit, and an indoor temperature sensor 9 is provided inside the indoor unit.

FIG. 4 is a schematic diagram of a physical structure of an electronic device. As shown in FIG. 4, the electronic device may include a processor 810, a communication interface 820, a memory 830, and a communication bus 840. The processor 810, the communication interface 820, and the memory 830 communicate with each other through the communication bus 840. The processor 810 may call logic instructions in the memory 830 to perform a control method for leakage of a flammable refrigerant, including: receiving a turn-on instruction for controlling an air conditioner to be turned on, obtaining an indoor ambient temperature, an outdoor ambient temperature, and an actual saturation temperature corresponding to at least one of a low pressure or a high pressure of a compressor 1; determining a standard saturation temperature based on the indoor ambient temperature and the outdoor ambient temperature; and generating execution logic based on the actual saturation temperature and the standard saturation temperature, and controlling operation of the compressor 1 based on the execution logic.

In addition, the logic instructions in the memory 830 described above may be implemented in the form of a software functional unit and may be stored in a computer readable storage medium while being sold or used as a separate product. Based on such understanding, the solution of the present disclosure or a part of the technical solution, which is essential or contributes to the prior art, may be embodied in the form of a software product, which is stored in a storage medium, including several instructions to cause a computer device (which may be a personal computer, server, or network device, etc.) to perform all or part of the steps of the methods described in various embodiments of the present application. The storage medium described above includes various media that may store a program code such as a U disk, a mobile hard disk, a read-only memory (ROM), a random access memory (RAM), a magnetic disk, or a compact disk.

The present application further provides a computer program product including a computer program, where the computer program may be stored on a non-transitory computer-readable storage medium, when the computer program is executed by a processor, the computer may perform a control method for leakage of a flammable refrigerant, including: to perform a control method for leakage of a flammable refrigerant, including: receiving a turn-on instruction for controlling an air conditioner to be turned on, obtaining an indoor ambient temperature, an outdoor ambient temperature, and an actual saturation temperature corresponding to at least one of a low pressure or a high pressure of a compressor 1; determining a standard saturation temperature based on the indoor ambient temperature and the outdoor ambient temperature; and generating execution logic based on the actual saturation temperature and the standard saturation temperature, and controlling operation of the compressor 1 based on the execution logic.

The present application further provides a non-transitory computer-readable storage medium storing a computer program, when executing the computer program, the processor performs a control method for leakage of a flammable refrigerant, including: to perform a control method for leakage of a flammable refrigerant, including: receiving a turn-on instruction for controlling an air conditioner to be turned on, obtaining an indoor ambient temperature, an outdoor ambient temperature, and an actual saturation temperature corresponding to at least one of a low pressure or a high pressure of a compressor 1; determining a standard saturation temperature based on the indoor ambient temperature and the outdoor ambient temperature; and generating execution logic based on the actual saturation temperature and the standard saturation temperature, and controlling operation of the compressor 1 based on the execution logic.

The device embodiments described above are merely illustrative, where the units described as separate components may or may not be physically separate, and the components displayed as units may or may not be physical units, that is, may be located at the same place, or it can be distributed to multiple network units. Some or all of the modules may be selected according to actual needs to achieve the purpose of the solution of the present embodiment. Those skilled in the art may understand and implement the embodiments described above without paying creative labors.

Through the description of the embodiments above, those skilled in the art can clearly understand that the various embodiments can be implemented by means of software and a necessary general hardware platform, and may also be implemented by hardware. Based on such understanding, the technical solution of the present application or a part of the technical solution, which is essential or contributes to the prior art, may be embodied in the form of a software product, which is stored in a storage medium such as ROM/RAM, magnetic Discs, optical discs, etc., including several instructions to cause a computer device (which may be a personal computer, server, or network device, etc.) to perform various embodiments or a part of the methods described in various embodiments.

It should be noted that the above embodiments are only used to explain the solutions of the present application, and are not limited thereto; although the present application has been described in detail with reference to the foregoing embodiments, it should be understood by those skilled in the art that modifications to the solutions documented in the foregoing embodiments and equivalent substitutions to a part of the features may be made and these modifications and substitutions do not make the essence of the corresponding solutions depart from the scope of the solutions of various embodiments of the present application.

## Claims

1. A control method for leakage of a flammable refrigerant, comprising:
receiving a turn-on instruction for controlling an air conditioner to be turned on, and obtaining an indoor ambient temperature, an outdoor ambient temperature, and an actual saturation temperature corresponding to at least one of a low pressure or a high pressure of a compressor;
determining a standard saturation temperature based on the indoor ambient temperature and the outdoor ambient temperature; and
generating execution logic based on the actual saturation temperature and the standard saturation temperature, and controlling operation of the compressor based on the execution logic.

2. The control method of claim 1, wherein generating the execution logic based on the actual saturation temperature and the standard saturation temperature, and controlling the operation of the compressor based on the execution logic comprises:
controlling the compressor to be started in case that a difference between the actual saturation temperature and the standard saturation temperature does not exceed a given alarm threshold; or
controlling the air conditioner to perform a leakage protection operation in case that a difference between the actual saturation temperature and the standard saturation temperature exceeds a given alarm threshold, and controlling the compressor to be turned on after the leakage protection operation is completed.

3. The control method of claim 2, wherein the leakage protection operation comprises:
controlling a fresh air system linked to the air conditioner to be started.

4. The control method of claim 2, wherein the leakage protection operation comprises:
controlling an indoor fan and/or an outdoor fan of the air conditioner to be started and operate for a given duration.

5. The control method of claim 4, wherein controlling the indoor fan and/or the outdoor fan of the air conditioner to be started and operate for the given duration comprises:
determining that the indoor fan and/or the outdoor fan are started and adjusting a rotation speed of the indoor fan and/or the outdoor fan based on the difference between the actual saturation temperature and the standard saturation temperature,
wherein the difference between the actual saturation temperature and the standard saturation temperature is positively correlated with the rotation speed of the indoor fan and/or the outdoor fan.

6. The control method of claim 4, wherein controlling the indoor fan and/or the outdoor fan of the air conditioner to be started and operate for the given duration comprises:
controlling the indoor fan and/or the outdoor fan to be started at a lowest rotation speed, and determining the given duration based on the difference between the actual saturation temperature and the standard saturation temperature;
wherein the difference between the actual saturation temperature and the standard saturation temperature is positively correlated with the given duration.

7. The control method of any of claims 1 to 6, wherein determining the standard saturation temperature based on the indoor ambient temperature and the outdoor ambient temperature comprises:
in case that an absolute value of the difference between the indoor ambient temperature and the outdoor ambient temperature does not exceed a given difference, determining the standard saturation temperature to be a first given temperature, wherein the first given temperature is equal to the outdoor ambient temperature; or
in case that an absolute value of the difference between the indoor ambient temperature Tai and the outdoor ambient temperature Tao exceeds a given difference, determining the standard saturation temperature to be a second given temperature, wherein the second given temperature is α×Tao+β×Tai, and α and β are constants.

8. The control method of any of claims 2 to 6, wherein controlling the air conditioner to perform the leakage protection operation in case that the difference between the actual saturation temperature and the standard saturation temperature exceeds the given alarm threshold, and controlling the compressor to be turned on after the leakage protection operation is completed comprise:
in case that the difference between the actual saturation temperature and the standard saturation temperature exceeds the given alarm threshold, controlling the air conditioner to send alarm information to a user and obtain a control instruction issued by the user;
in case that the control instruction is determined to be shut down, controlling the air conditioner to be shut down; or
in case that the control instruction is determined to continue to start, controlling the air conditioner to perform the leakage protection operation until the difference between the actual saturation temperature and the standard saturation temperature is less than or equal to the given alarm threshold, and controlling the compressor to be turned on.

9. The control method of any of claims 2 to 6, wherein controlling the air conditioner to perform the leakage protection operation in case that the difference between the actual saturation temperature and the standard saturation temperature exceeds the given alarm threshold, and controlling the compressor to be turned on after the leakage protection operation is completed comprise:
obtaining a detection concentration of a leaked refrigerant in case that the difference between the actual saturation temperature and the standard saturation temperature exceeds the given alarm threshold;
controlling the air conditioner to be shut down in case that the detection concentration of the leaked refrigerant is greater than a given concentration; or
controlling the air conditioner to perform the leakage protection operation in case that the detection concentration of the leaked refrigerant is less than or equal to a given concentration, and controlling the compressor to be turned on after the leakage protection operation is completed.

10. A control device for leakage of a flammable refrigerant, comprising:
an obtaining module, used for receiving a turn-on instruction for controlling an air conditioner to be turned on, and obtaining an indoor ambient temperature, an outdoor ambient temperature, and an actual saturation temperature corresponding to at least one of a low pressure or a high pressure of a compressor;
a first controlling module, used for determining a standard saturation temperature based on the indoor ambient temperature and the outdoor ambient temperature; and
a second controlling module, used for generating execution logic based on the actual saturation temperature and the standard saturation temperature, and controlling operation of the compressor based on the execution logic.

11. An air conditioner comprising a memory, a processor, and a computer program stored on the memory and executable on the processor, wherein the processor performs the control method for leakage of the flammable refrigerant of any of claims 1 to 9 when executing the computer program.
